# EUROPÄISCHE PATENTSCHRIFT

(11) **EP 1 771 519 B1**
(45) Veröffentlichungstag und Bekanntmachung des Hinweises auf die Patenterteilung: **12.12.2007**
(21) Anmeldenummer: 05760729.3
(22) Anmeldetag: 23.06.2005
(51) Int. Cl.: C09C 1/36

(54) **WITTERUNGSSTABILES TITANDIOXID-PIGMENT UND VERFAHREN ZU SEINER HERSTELLUNG**
WEATHER-STABLE TITANIUM DIOXIDE PIGMENT AND METHOD FOR THE PRODUCTION THEREOF
PIGMENT DE DIOXYDE DE TITANE RESISTANT AUX INTEMPERIES ET PROCEDE DE PRODUCTION CORRESPONDANT

(30) Priorität: 31.07.2004 DE 102004037271
(43) Veröffentlichungstag der Anmeldung: 11.04.2007
(73) Patentinhaber: KRONOS INTERNATIONAL, INC., 51307 Leverkusen (DE)
(72) Erfinder: BLUEMEL, Siegfried, 40883 Ratingen (DE); DREWS-NICOLAI, Lydia, 51057 Köln (DE)
(86) Internationale Anmeldenummer: PCT/EP2005/006797
(87) Internationale Veröffentlichungsnummer: WO 2006/012950

(56) Entgegenhaltungen:
- US-A- 2 913 419
- US-A- 3 928 057

## Beschreibung

Die Erfindung betrifft ein witterungsstabiles Titandioxid-Pigment und ein Verfahren zu seiner Herstellung.

Titandioxid wird aufgrund seines hohen Lichtbrechungsindexes als hochwertiges Pigment in vielen Bereichen wie z.B. in Kunststoffen, Beschichtungen, Papier, Fasern eingesetzt. Durch sein hohes Streuvermögen verleiht Titandioxid solchen Systemen vorteilhafte optische Eigenschaften wie Helligkeit, Deckvermögen und Aufhellvermögen. Allerdings ist Titandioxid photoaktiv, d.h. durch die Einwirkung von ultravioletten Strahlen entstehen über Elektron-Loch-Paare freie Radikale an der Oberfläche, die mit den in der umgebenden Matrix vorhandenen Stoffen Reaktionen eingehen können, was zur Zerstörung dieser Matrix führen kann. Es ist deshalb wünschenswert, witterungsstabile Titandioxid-Pigmente herzustellen, bei denen entweder die Entstehung freier Radikale oder die Reaktion der gebildeten freien Radikale mit der Bindemittelmatrix behindert wird. Gleichzeitig sollen dabei die optischen Eigenschaften möglichst nicht beeinträchtigt werden.
Ein häufig. beschrittener Weg, um die Witterungsstabilität von TiO₂-Pigmenten zu verbessern, d.h. letztendlich den photokatalytischen Effekt, der vom Titandioxid ausgeht, zu reduzieren, besteht darin, die Partikel im Rahmen einer Nachbehandlung z.B. mit Siliciumoxid und/oder Zirkonoxid und/oder Aluminiumoxid zu beschichten. Insbesondere wird in mehreren Patenten das Aufbringen einer möglichst dichten amorphen Hülle aus SiO₂, einer sogenannten "dense skin", beschrieben, die verhindern soll, dass sich freie Radikale an der Partikeloberfläche bilden.

Die US 2,885,366 beschreibt eine Methode, um ein feinkörniges Substrat mit einer dichten amorphen SiO₂-Hülle zu umgeben. Dabei ist es von Bedeutung, dass das feinteilige Substrat nicht aus SiO₂ besteht, die Oberfläche aber eine genügende Reaktivität zur Anlagerung einer dichten Kieselsäurehülle aufweist. Es ist nicht unbedingt erforderlich, dass der gesamte Grundkörper aus diesem reaktiven Material besteht, sondern es genügt, dass nur die Oberfläche diesem Material entspricht. Eine Vielzahl von Substraten zeigen die geforderte Reaktivität, wie z.B. Metalloxide oder im pH-Bereich von 7 bis 11 unlösliche Metallsilikate. Die Aufbringung der dichten amorphen SiO₂-Schicht auf einen solchen Trägerkörper erfolgt durch Zugabe von aktivem Siliciumdioxid ("active silica"), d.h. von SiO₂ mit niedrigem Kondensationsgrad in einem pH-Bereich von 8 bis 11 bei einer Temperatur von 60 bis 125 °C mit einer Geschwindigkeit, die eine durch eine Formel gegebene berechenbare Größe nicht überschreitet. Dadurch wird garantiert, dass sich die spezifische Oberfläche des Teilchens, die als indirekter Indikator für die Dichtigkeit der Hülle herangezogen wird, nicht vergrößert. In dem Verfahren gemäß US 2,885,366 sind somit grundsätzlich die langsame Zugabegeschwindigkeit und die Randbedingung, dass das aktive Siliciumdioxid in einem pH-Bereich zugesetzt wird, bei dem die Auffällung der amorphen Kieselsäureschicht auf das Trägersubstrat sofort stattfindet, von Bedeutung.

Neben einer hohen Bewitterungsstabilität ist für TiO₂-Pigmente wichtig, dass bei ihrer Anwendung in Beschichtungsstoffen eine hohe Opazität und ein hoher Glanz erreicht wird. Nach der US Re. 27,818 weisen Pigmente, die nach der US 2,885,366 hergestellt werden, aber gerade hier Defizite auf. Nach der US Re. 27,818 lässt sich eine Verbesserung erreichen, wenn nach der Aufbringung der dichten amorphen SiO₂-Hülle eine weitere Schicht aus Aluminiumoxidhydrat aufgebracht wird. Dies wird dadurch erreicht, dass, nachdem die dichte amorphe SiO₂-Hülle in einem pH-Bereich von 8 bis 11 aufgefällt wurde, eine wasserlösliche Aluminiumverbindung zugegeben, bei der Zugabe der pH-Wert unter 7 gehalten und anschließend die Suspension auf einen pH-Wert von 7 bis 8 eingestellt wird.

Nach der US 4,125,412 liegt ein wesentlicher Nachteil des vorgenannten Verfahrens (US Re. 27,818) in der langen Zugabezeit zur Absenkung des pH-Werts nach der Siliciumdioxid-Zugabe. Dieses sehr zeitintensive Verfahren ist besonders nachteilig, will man die Nachbehandlung kontinuierlich durchführen. Es wird deshalb ein beschleunigtes und damit wirtschaftlicheres Nachbehandlungsverfahren zum Aufbringen einer dichten SiO₂- und einer Al₂O₃-Schicht offenbart. Hierbei erfolgt die Zugabe des Wasserglases zu einer TiO₂-Suspension mit einer Temperatur von 80 bis 100 °C schnell, wobei der pH-Wert der TiO₂-Suspension sauer oder wahlweise vor der Zugabe auf 9 bis 10,5 eingestellt werden kann. In beiden Fällen erfolgt ein Reifungsprozess bei einem pH-Wert von 9 bis 10,5, wonach anschließend eine zusätzliche Schicht einer Aluminiumverbindung aufgebracht wird.

Die oben beschriebenen Verfahren haben den Nachteil, dass die Fällung der "dense skin"-SiO₂-Schicht bei sehr hohen Temperaturen erfolgen muss, um zu einer möglichst perfekten Hülle zu kommen. In der EP 0 245 984 B1 (US 4,781,761) wird ein Nachbehandlungsverfahren angegeben, das durch die gleichzeitige Zugabe einer Na₂SiO₃. sowie einer B₂O₃-haltigen Lösung zu einer TiO₂-Suspension, die zuvor auf einen pH-Wert von 7 bis 10,5 eingestellt wurde, erlaubt, den Nachbehandlungsprozess bei geringfügig niedrigeren Temperaturen von 65°C bis 90°C durchzuführen, was aus prozesstechnischer Sicht Vorteile bringt. Der pH-Wert, der durch die Zugabe der Lösungen auf pH-Werte von 10,5 bis 11,5 ansteigt, wird anschließend durch Zugabe von Säure, z.B. HCl, auf etwa 8 gesenkt.

Die erwähnten Patente beschreiben grundsätzliche Verfahren zur Herstellung einer SiO₂-dense-skin-Beschichtung, verschiedene Methoden zur Verkürzung der Nachbehandlungszeiten bzw. Verfahren zur Optimierung des Dispergierverhaltens von TiO₂-Pigmenten. Diesen Verfahren ist gemein, dass eine möglichst dichte, geschlossene SiO₂-Nachbehandlungshülle angestrebt wird als Garant für eine niedrige Photoaktivität. Sie beschreiben jedoch keine Verfahren zur weiteren Erhöhung der Pigmentstabilität bzw. Reduzierung der photokatalytischen Aktivität.

Ein Ansatz in dieser Richtung wird in der US 2003/089278 A1 beschrieben. Dort ist ebenfalls ein Verfahren zur Herstellung eines SiO₂-dense-skin nachbehandelten Pigments mit äußerer Aluminium-haltiger Hülle angegeben. Neben der Verbesserung des Dispergierverhaltens wird eine Erhöhung der Stabilität dadurch erreicht, dass vor der Ausführung der SiO₂-dense-skin-Oberflächenbehandlung Zitronensäure zugesetzt wird. Die Erhöhung der Stabilität wird auf die Kombination von einer SiO₂-dense-skin-Schicht (dichte SiO₂-Hülle) und einer mit Zitronensäure stabilisierten Aluminium-haltigen Nachbehandlungsschicht zurückgeführt.

SiO₂-dense-skin-Behandlungen finden nicht nur im Zusammenhang mit TiO₂-Pigmenten zur Verbesserung deren Stabilität Erwähnung, sondern auch z.B. bei der Beschichtung von Glasfasern, um die Festigkeit gegenüber Abrasion zu erhöhen und die Gleitfähigkeit der Fasern in den erzeugten Waren zu vermindern. In diesem Zusammenhang gibt die US 2,913,419 an, andere polyvalente Metallionen zusammen mit der Kieselsäure auf der Partikeloberfläche zu fällen. Als wesentlich wird für dieses Verfahren angesehen, dass die aktive Kieselsäure und die Metallsalzlösung gleichzeitig, aber in getrennten Strömen in die Suspension gegeben werden, wobei der pH-Wert im Bereich 8 bis 11 durch parallele Zugabe von Säuren oder Laugen konstant gehalten wird und eine möglichst intensive Durchmischung während der parallelen Zugabe der Chemikalien erreicht werden muss. Als optimal wird z.B. die Zugabe der beiden Lösungen in eine Zentrifugalpumpe, die die nachzubehandelnde TiO₂-Suspension fördert, angesehen. Des weiteren darf die spezifische Oberfläche der Partikel im Verlauf der Behandlung nicht ansteigen.
Angewendet wird das Verfahren auf eine Vielzahl von sehr feinkörnigen Substratmaterialien mit Partikelgrößen bis 100 nm wie z.B. Silica-Sol, Metall- oder Oxidpulver, Tonminerale, Fasern usw. Die Behandlung dient im wesentlichen dem mechanischem Schutz des Substratmateriats.

Die Aufgabe der vorliegenden Erfindung ist es, ein witterungsstabiles Titandioxid-Pigment zu schaffen und ein Verfahren anzugeben, mit dem die Witterungsstabilität, insbesondere die Kreidungsstabilität und die Glanzbeständigkeit von SiO₂-dense-skin-Titandioxid-Pigmenten weiter verbessert werden kann unter Beibehaltung guter optischer Eigenschaften.

Die Aufgabe wird durch ein Titandioxid-Pigment gelöst, dessen Partikel eine mit Metallatomen dotierte, dichte SiO₂-Hülle aufweisen, wobei die dichte Siliciumdioxid-Hülle mehrlagig aufgebaut ist und die innerste Lage keine signifikante Menge an Metallatomen enthält.
Des Weiteren wird die Aufgabe durch ein Verfahren zur Herstellung eines Titandioxid-Pigments gelöst, dessen Partikel mit einer mit Metallatomen dotierten, dichten Siliciumdioxid-Hülle beschichtet sind, wobei die Beschichtungskomponenten nacheinander in die Suspension zugegeben werden.
Weitere vorteilhafte Ausgestaltungen der Erfindung sind in den Unteransprüchen beschrieben.

Gegenstand der Erfindung ist somit ein beschichtetes Titandioxid-Pigment, das hinsichtlich seiner Stabilität verbessert ist und das dadurch bei gleichen guten optischen Eigenschaften z.B. Anstrichen oder Kunststoffen eine verbesserte Witterungsstabilität bzw. Lichtechtheit verleiht, wobei die Anwendung nicht auf diese Systeme beschränkt ist.
Gegenstand der Erfindung ist ferner ein Verfahren zur Herstellung eines solchen witterungsstabilen Titandioxid-Pigments, bei dem durch eine Nachbehandlung in wässriger Phase eine dichte SiO₂-Hülle aufgebracht wird, die mit Metallatomen dotiert ist, sowie die Verwendung dieses Pigments insbesondere in Lacken, Farben und Kunststoffen.

Hier und im folgenden sollen unter dem Begriff "Metallatome" gegebenenfalls auch Metallionen verstanden werden, die in der Struktur der dichten SiO₂-Hülle chemisch oder physikalisch gebunden sind, ohne dass die genaue Art der Einbindung nachgewiesen wurde.

Die Witterungsstabilität eines mit TiO₂ pigmentierten Systems wird in der Regel anhand verschiedener Kennwerte beschrieben. Beispielsweise werden der Kreidungsbeginn und die Glanzbeständigkeit (Zeitraum bis zum Unterschreiten des 50 %-Restglanzwertes) von Pigment-Lacksystemen ermittelt, die entweder einer Außenbewitterung an definierten Standorten oder einem beschleunigten Bewitterungstest (WOM) unterzogen wurden.
Da diese Testverfahren, insbesondere die Außenbewitterung, sehr lange dauern, wird zur Charakterisierung der Witterungsbeständigkeit häufig die Dichtigkeit der SiO₂-Beschichtung auf der Pigmentpartikeloberfläche herangezogen: Man geht dabei davon aus, dass die Witterungsstabilität in Korrelation mit der Geschlossenheit der die Pigmentpartikel umhüllenden SiO₂-Schicht steht. In der Literatur werden dieser Zusammenhang sowie Verfahren, um die Güte (Dichtigkeit) der SiO₂-Hülle zu bestimmen, beschrieben. Die Güte (Dichtigkeit) der SiO₂-Hülle kann indirekt durch den H₂SO₄-Löslichkeitstest bestimmt werden (Dwight A. Holtzen et. al: "TiO₂ Photochemistry and Color Applications", DuPont White Pigment and Mineral Products, ANTEC 2001, S. 2374). Beim H₂SO₄-Löslichkeitstest wird die unterschiedliche Löslichkeit von TiO₂ und SiO₂ gegenüber heißer konzentrierter Schwefelsäure ausgenutzt: je dichter und perfekter die Hülle, desto geringer ist die H₂SO₄-Löslichkeit des Pigmentpartikels.
Ein weiterer Kennwert für die Güte der Hülle ist die Veränderung der spezifischen Oberfläche (z.B. nach dem Brunauer-Emmett-Teller-Verfahren: BET) infolge der Nachbehandlung gegenüber dem Grundkörper.
Nach der oben genannten Veröffentlichung von Dwight A. Holtzen et al. korreliert das Verhalten der Beschichtungssysteme bei Außenbewitterung, angezeigt durch die Glanzbeständigkeit oder die Kreidungsstabilität, in der Regel mit den Ergebnissen aus der H₂SO₄-Löslichkeitstestung. In dieser Veröffentlichung wird eine qualitative Differenzierung der TiO₂-Pigmente hinsichtlich ihrer Witterungsbeständigkeit in drei Kategorien vorgenommen.

Im Vergleich der möglichen Tests ist dem beschleunigten Bewitterungstests (WOM) in jedem Fall gegenüber dem H₂SO₄-Löslichkeitstest der Vorzug zu geben. Bei dieser Art von Test ist nach Michael P. Diebold ("Analysis and Testing - Unconventional Effects of TiO₂ on Paint Durability", veröffentlicht unter: www.coatings.de/articles/ecspapers/diebold/diebold.htm) von den beiden Testergebnissen Kreidungsbeginn und Glanzbeständigkeit darüber hinaus dem Testergebnis der Kreidungsstabilität gegenüber den Restglanzwerten zur Charakterisierung der Witterungsbeständigkeit von TiO₂-Pigmenten der Vorzug zu geben.

Es wurde nun überraschenderweise gefunden, dass sich Pigmente mit deutlich verbesserter Bewitterungsstabilität herstellen lassen, bei denen eine besonders hohe Dichtigkeit der SiO₂-dense-skin-Hülle (dichte SiO₂-Hülle) nicht erforderlich ist, ja sogar die H₂SO₄-Löslichkeit mit zunehmender Kurzbewitterungsstabilität abnimmt.

Bei dem erfindungsgemäßen Verfahren wird diese Verbesserung der Bewitterungs'stabilität gegenüber dem Stand der Technik durch den Einbau von Metallatomen in die dichte SiO₂-Hülle sowie durch die besondere Art der Nachbehandlungsführung erreicht. Metalle, die durch ihren Einbau in die dichte SiO₂-Hülle zu einer Verbesserung der Bewitterungsstabilität führen, sind insbesondere Ti, Sn und Zr. Aluminium wird nicht verwendet, um es als Metallatom in die dichte SiO₂-Hülle einzubauen.

Die erfindungsgemäße Beschichtung wird so hergestellt, dass die Komponenten nacheinander bei gleitendem pH-Wert in die TiO₂-Suspension gegeben werden. Die TiO₂-Suspension wird zunächst auf einen pH-Wert von mindestens 9 bevorzugt mindestens 10 insbesondere bevorzugt mindestens 11 eingestellt. Die Einstellung erfolgt mit einer alkalischen Verbindung, z.B. mit NaOH. Anschließend wird die SiO₂-Komponente zugegeben, bevorzugt als Alkalisilikatlösung, z.B. Kalium- oder Natriumwasserglas. Danach erfolgt die Zugabe der Metallkomponente in Form einer Metallsalzlösung, die alkalischen oder sauren Charakter haben kann. Üblicherweise werden saure Komponenten eingesetzt z.B. Titanylchlorid, Zirconsulfat, Zirkonoxychlorid, Zinn(II)-Chlorid usw. Dem Fachmann sind weitere geeignete Verbindungen bekannt. Es können Mischungen von Metallsalzlösungen oder mehrere Metallsalzlösungen nacheinander zugegeben werden. Zur vollständigen Ausbildung der mit Metallatomen dotierten, dichten SiO₂-Hülle ist es erforderlich, den pH-Wert unter 9 bevorzugt unter 8 abzusenken. Dies wird entweder durch Zugabe von ausreichend angesäuerter Metallsalzlösung oder durch Zugabe zusätzlicher metallsalzfreier Säure wie z.B. HCl oder H₂SO₄ erreicht. Die Fällung der dichten SiO₂-Hülle sowie der Metallkomponenten findet im pH-Bereich > 6 statt.

In einer alternativen Ausführungsform kann zunächst die Metallsalzlösung in die TiO₂-Suspension gegeben werden, wobei ein pH-Wert von 9 bevorzugt 10 insbesondere mindestens 11 nicht unterschritten werden sollte. Danach wird die Silikatlösung zugesetzt und der pH-Wert anschließend auf unter 9 bevorzugt unter 8 abgesenkt.

Die erfindungsgemäße Verfahrensführung zeichnet sich dadurch aus, dass ein Gradient in der Verteilung der Metallatome innerhalb der dichten SiO₂-Hülle erzeugt wird.
Wird zunächst die Silikatlösung zugegeben, bildet sich auf der Oberfläche der TiO₂-Partikel eine erste Lage SiO₂. Diese Lage enthält keinen signifikanten Anteil der Metallkomponente. "Kein signifikanter Anteil" bedeutet in diesem Zusammenhang eine Menge, die keinen Einfluss auf die Eigenschaften des Produkts hat und die nicht absichtlich zugefügt wurde. Im Verlauf der sich anschließenden Zugabe der Metallsalzlösung bzw. Metallsalzlösungen wird neben der Metallkomponente weitere Kieselsäure auf der ersten SiO₂-Lage in Form einer Mischschicht aus SiO₂ und Metallkomponente gefällt. Eine nach Zugabe der Metallsalzlösung durchgeführte pH-Wert-Absenkung auf unter 9 mit Hilfe einer metallsalzfreien Säure führt zur Abscheidung der restlichen Kieselsäure auf der Partikeloberfläche.

Durch die Aufbringung einer zusätzlichen Aluminiumoxidhydrathülle lassen sich die optischen Eigenschaften des Pigments wie Aufhellvermögen, Dispergierverhalten usw. verbessern. Die Ausfällung einer solchen Aluminiumoxidhydrathülle kann bei festen pH-Werten im Bereich von 3,5 bis 10,0 erfolgen oder auch bei sich ändernden pH-Werten. Als Ausgangssubstanz bietet sich z.B. Natriumaluminat an, zur Einstellung des pH-Werts während der Fällung der Aluminiumoxidhydrathülle ist insbesondere HCl geeignet.

Die erfindungsgemäßen Pigmente enthalten in der dichten Hülle ("dense skin") auf der Partikeloberfläche 2,0 bis 6,0 Gew.-%, bevorzugt 2,5 bis 4,0 Gew.-% SiO₂ und 0,1 bis 3,0 Gew.-% bevorzugt 0,1 bis 1,0 Gew.-% Metalle gerechnet als Oxid und bezogen auf das Gesamtpigment.

In einer bevorzugten Ausführungsform sind die Partikel zusätzlich mit einer zusätzlichen Schicht aus 0,5 bis 6,0 Gew.-% bevorzugt 1,0 bis 4,0 Gew.-% Aluminiumoxidhydrat gerechnet als Al₂O₃ und bezogen auf das Gesamtpigment überzogen.

### Beispiele

Die Erfindung wird anhand der nachfolgenden Beispiele genauer erläutert, ohne dass damit eine Einschränkung der Erfindung verbunden ist.

Das erfindungsgemäße Verfahren geht von einem TiO₂-Grundkörper aus, hergestellt nach dem Chlorid- oder Sulfatprozess. Es kann auch ein Gemisch der Grundkörpertypen eingesetzt werden. Unter TiO₂-Grundkörper versteht man die noch nicht nachbehandelten TiO₂Partikel. Die Photostabilität des Grundkörpers, die durch die Kristallmodifikation des TiO₂-Grundkörpers - Rutil oder Anatas - bestimmt ist und darüber hinaus durch Dotierung mit bekannten Stoffen wie Al, Cr usw., die dem Fachmann bekannt sind, weiter erhöht sein kann, gibt das Ausgangsniveau der Witterungsstabilität des Pigments vor, welches durch das erfindungsgemäße Verfahren erhöht werden soll.

Der Grundkörper kann zunächst gemahlen werden, beispielsweise in einem Nassmahlverfahren. Vorzugsweise wird bei der Nassmahlung ein Dispergiermittel zugegeben, wobei es sich um Polyphosphate, Polyacrylate oder andere dem Fachmann bekannte Dispergiermittel handeln kann.
Der pH-Wert der Ausgangssuspension wird mit Säure (z.B. HCl) bzw. Lauge (z.B. NaOH) auf einen pH-Wert von mindestens 10 bzw. 11 eingestellt.

### Beispiel 1 (Vergleichsbeispiel)

Eine nassgemahlene Rutil-TiO₂-Suspension aus dem Chloridprozess enthaltend 5 kg TiO₂-Grundkörper mit einer Konzentration von 350 g/l wird auf 80 °C aufgeheizt und mit NaOH auf einen pH-Wert von 11,5 eingestellt. Danach wird 3,0 Gew.-% SiO₂ in Form von Kaliumwasserglas innerhalb von 30 Minuten zugesetzt. Nach 10 Minuten Retention wird der pH-Wert durch Zugabe von HCl innerhalb von 150 Minuten auf einen pH-Wert von 4 abgesenkt. Nach 10 Minuten Rührung wird 3,0 Gew.-% Al₂O₃ als Natriumaluminat zusammen mit HCl innerhalb von 30 Minuten so zugegeben, dass der pH-Wert während dieser Parallelzugabe bei ca. 4 konstant bleibt.
Die Suspension wird mit NaOH auf einen pH-Wert von 6,5 bis 7 eingestellt und das Material anschließend wie in der Praxis üblich filtriert, gewaschen, getrocknet und mit einer Dampfstrahlmühle unter Zugabe von TMP (Trimethylolpropan) zerkleinert.

### Beispiel 2

Eine nassgemahlene Rubl-TiO₂-Suspension aus dem Chloridprozess enthaltend 5 kg TiO₂-Grundkörper mit einer Konzentration von 350 g/l wird auf 80 °C aufgeheizt und mit NaOH auf einen pH-Wert von 11,5 eingestellt. Danach wird 3,0 Gew.-% SiO₂ in Form von Kaliumwasserglas innerhalb von 30 Minuten zugesetzt. Nach 10 Minuten Retention wird der pH-Wert durch Zugabe von 0,2 Gew.-% TiO₂ in Form von Titanoxychlorid zusammen mit HCl innerhalb von 150 Minuten auf einen pH-Wert von 4 abgesenkt.
Die weitere Behandlung erfolgt wie in Beispiel 1.

### Beispiel 3

Wie Beispiel 2, nur dass 0,4 Gew.-% TiO₂ in Form von Titanoxychlorid zugesetzt wird.

### Beispiel 4

Wie Beispiel 2, nur dass 0,6 Gew.-% TiO₂ in Form von Titanoxychlorid zugesetzt wird.

**TABELLE 1**

| Beispiel | Metalldotierung | Kreidungsbeginn | Glanzbeständigkeit | H₂SO₄ Löslichkeit | BET |
|---|---|---|---|---|---|
| | [Gew.-%] | [Tage] | [Tage] | [Gew.-% TiO₂] | [m²/g] |
| | | | | | |
| 1 (Vergleich) | - | 16,5 | 19,5 | 2,1 | 15,1 |
| 2 | 0,2 TiO₂ | 19.5 | 21,5 | 4,4 | 14,1 |
| 3 | 0,4 TiO₂ | 20 | 22 | 6,4 | 18,1 |
| 4 | 0,6 TiO₂ | 20 | 22 | 9,4 | 17,4 |

### Beispiel 5 (Vergleichsbeispiel)

Eine nassgemahlene Rutil-TiO₂-Suspension aus dem Chloridprozess enthaltend 7 kg TiO₂-Grundkörper mit einer Konzentration von 350 g/l wird auf 75 °C aufgeheizt und mit NaOH auf einen pH-Wert von ca. 11,5 eingestellt. Danach wird 3,0 Gew.-% SiO₂ in Form von Natriumwasserglas innerhalb von 30 Minuten zugesetzt. Nach 15 Minuten Retention wird der pH-Wert durch Zugabe von HCl innerhalb von 200 Minuten auf einen pH-Wert von 7,5 abgesenkt. Nach 10 Minuten Rührung wird 1,5 Gew.-% Al₂O₃ als Natriumaluminat zusammen mit HCl innerhalb 30 Minuten so zugegeben, dass der pH-Wert während dieser Parallelzugabe bei ca. 7,5 konstant bleibt.
Die Suspension wird mit HCl auf einen pH-Wert von etwa 5,5 eingestellt und das Material anschließend wie in der Praxis üblich filtriert, gewaschen, getrocknet und mit einer Dampfstrahlmühle unter Zugabe von TMP zerkleinert.

### Beispiel 6

Eine nassgemahlene Rutil-TiO₂-Suspension aus dem Chloridprozess enthaltend 7 kg TiO₂-Grundkörper mit einer Konzentration von 350 g/l wird auf 75 °C aufgeheizt und mit NaOH auf einen pH-Wert von ca. 11,5 eingestellt. Danach wird 3,0 Gew.-% SiO₂ in Form von Natriumwasserglas in 30 Minuten zugesetzt. Nach 15 Minuten Retention wird 0,5 Gew.-% TiO₂ als Titanoxychlorid-Lösung innerhalb von 150 Minuten zugesetzt. Danach wird der pH-Wert durch Zugabe von HCI innerhalb von 50 Minuten auf 7,5 abgesenkt. Nach 10 Minuten Rührung wird 1,5 Gew.-% Al₂O₃ als Natriumaluminat zusammen mit HCI innerhalb von 30 Minuten so zugegeben, dass der pH-Wert während dieser Parallelzugabe bei ca. 7,5 konstant bleibt.
Die weitere Behandlung erfolgt wie in Beispiel 5.

### Beispiel 7

Eine nassgemahlene Rutil-TiO₂-Suspension aus dem Chloridprozess enthaltend 7 kg TiO₂-Grundkörper mit einer Konzentration von 350 g/l wird auf 75 °C aufgeheizt und mit NaOH auf einen pH-Wert von 11,5 eingestellt. Danach wird 3,0 Gew.-% SiO₂ in Form von Natriumwasserglas innerhalb von 30 Minuten zugesetzt. Nach 15 Minuten Retention wird 0,6 Gew.-% ZrO₂ als Zirkonsulfat-Lösung innerhalb von 80 Minuten zugesetzt. Danach wird durch Zugabe von HCl der pH-Wert innerhalb von 130 Minuten auf einen Wert von 7,5 abgesenkt. Nach 10 Minuten Rührung wird 1,5 % Al₂O₃ als Natriumaluminat zusammen mit HCl innerhalb von 30 Minuten so zugegeben, dass der pH-Wert während dieser Parallelzugabe bei ca. 7,5 konstant bleibt.
Die weitere Behandlung erfolgt wie in Beispiel 5.

### Beispiel 8

Eine nassgemahlene Rutil-TiO₂-Suspension aus dem Chloridprozess enthaltend 7 kg TiO₂-Grundkörper mit einer Konzentration von 350 g/l wird auf 75 °C aufgeheizt und mit NaOH auf einen pH-Wert von 11,5 eingestellt. Danach wird 3,0 Gew.-% SiO₂ in Form von Natriumwasserglas innerhalb von 30 Minuten zugesetzt. Nach 15 Minuten Retention wird 0,5 Gew.-% SnO₂ als Zinn(II)-Chlorid-Lösung innerhalb von 90 Minuten zugesetzt. Danach wird durch Zugabe von HCl der pH-Wert innerhalb von 120 Minuten auf 7,5 abgesenkt. Nach 10 Minuten Rührung wird 1,5 Gew.-% Al₂O₃ als Natriumaluminat zusammen mit HCl innerhalb von 30 Minuten so zugegeben, dass der pH-Wert während dieser Parallelzugabe bei ca. 7,5 konstant bleibt.
Die weitere Behandlung erfolgt wie in Beispiel 5.

**TABELLE 2**

| Beispiel | Metalldotierung | Kreidungsbeginn | Glanzbeständigkeit | H₂SO₄ Löslichkeit | BET |
|---|---|---|---|---|---|
| | [Gew.-%] | [Tage] | [Tage] | [Gew.-% TiO₂] | [m²/g] |
| | | | | | |
| 5 (Vergleich) | - | 15 | 17,5 | 2,8 | 10,1 |
| 6 | 0.5 TiO₂ | 18 | 19 | 6,6 | 12,9 |
| 7 | 0,6 ZrO₂ | 17.5 | 18.5 | 6,2 | 15,1 |
| 8 | 0,5 SnO₂ | 24,5 | 19 | 1,5 | 10,3 |

### Beispiel 9

Eine nassgemahlene Rutil-TiO₂-Suspension aus dem Chloridprozess enthaltend 7 kg TiO₂-Grundkörper mit einer Konzentration von 350 g/l wird auf 75 °C aufgeheizt und mit NaOH auf einen pH-Wert von 10 eingestellt. Danach wird 3,0 Gew.-% SiO₂ in Form von Natriumwasserglas innerhalb von 30 Minuten zugesetzt. Nach 15 Minuten Retention wird 0,5 Gew.-% SnO₂ als Zinn(ii)chloridlösung innerhalb von 90 Minuten zugesetzt. Danach wird durch Zugabe von HCl der pH-Wert innerhalb von 25 Minuten auf 7,5 abgesenkt.
Während der Zugabe von Wasserglas werden nach Zugabe von etwa 1/3 bzw. 2/3 bzw. der Gesamtmenge SiO₂ und anschließend während der Zugabe von SnCl₂-Lösung nach Zugabe von etwa 1/3 bzw. 2/3 bzw. der Gesamtmenge SnCl₂ gerechnet als SnO₂ - Suspensionsproben entnommen. Die Proben werden ohne weitere Veränderungen zentrifugiert, um eine zusätzliche Fällung zu vermeiden. Insbesondere erfolgt keine pH-Wert-Einstellung und keine Waschung. Das Material wird bei 160°C im Trockenschrank getrocknet, gemörsert und mit Röntgenfluoreszenz (RFA) auf SiO₂ und SnO₂ analysiert.
Die Analyseergebnisse sind in Tabelle 3 angegeben. Die Analyseergebnisse zeigen, dass sich eine mehrlagige SiO₂-Hülle mit einer inneren Lage aus etwa 50 % der zugegebenen Kieselsäure und einer sich anschließenden Mischschicht aus SiO₂ und SnO₂

**TABELLE 3**

| (Mengenangaben in Gew.-%) | | | | | | | |
|---|---|---|---|---|---|---|---|
| Verfahrensschritte | Kieselsäure-Zugabe | | | SnCl₂-Zugabe | | | pH-Absenkung |
| pH Suspension | 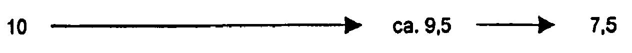 | | | | | | |
| SiO₂ Gesamtzugabe | 1,0 | 2,1 | 3,0 | | | 3,0 | |
| SiO₂ an der Oberfläche | 0,7 | 1,1 | 1,4 | 1,7 | 2,2 | 2,6 | 3,0 |
| SnO₂ Gesamtzugabe | | | | 0,14 | 0,33 | 0,50 | |
| SnO₂ an der Oberfläche | | | | 0,10 | 0,32 | 0,50 | 0,50 |

### Testmethoden

### Photostabilität (Kreidung / Glanzbeständigkeit):

Die Photostabilität der hergestellten Beispiel-Pigmente wird in einem Alkydharz-Lacksystem getestet, das einer Kurzbewitterung ausgesetzt wird. Die Bewitterung findet in einem sogenannten Weather-Ometer (WOM), einem Bewitterungsgerät statt, das aus einer belüfteten Prüfkammer besteht mit
a.) Strahlungsquelle (Kohleelektroden, die im Betrieb einen Lichtbogen erzeugen)
b.) Strahlungsfilter aus Spezialglas
c.) Vorrichtung zur Probenberieselung mit Wasser
d.) Zerstäuber zur Erzeugung von Luftfeuchtigkeit
e.) drehbarem Probenhalter
Während des Testzyklus wird eine Freibewitterung zeitraffend simuliert. Innerhalb der Testzeit verwittert der Lack und es werden die Kreidungsresistenz und die Glanzbeständigkeit untersucht. Idealerweise werden nur Proben aus demselben Testzyklus miteinander verglichen.
Die Messung der Kreidung erfolgt gemäß DIN 53159. Dabei wird auf die kreidende Lackoberfläche ein schwarzes eingeweichtes Photopaper gedrückt Als Kreidungsbeginn (Kreidungsresistenz) gilt der Tag, an dem Pigment- und Füllstoffpartikel einen vollständigen weißen Abdruck hinterlassen. Die Glanzbeständigkeit wird durch tägliche Glanzmessung mit einem Haze-Gloss-Reflektometer ermittelt. Angegeben wird der Zeitpunkt in Tagen, an dem der Glanz auf 50 % des Ausgangswerts abgefallen ist. Bei Proben aus demselben Testzyklus können die Absolutwerte (in Tagen) der Kreidungsresistenz und der Glanzbeständigkeit direkt verglichen werden.

### H₂SO₄-Löslichkeit:

Eine Suspension aus 500 mg Pigment in 25 ml konzentrierter Schwefelsäure (96 %) wird 60 Minuten bei 175 °C gehalten. Nach Filtration wird im Filtrat das gelöste TiO₂ mittels ICP-Atomemissionsspektrometrie bestimmt Je geringer die Konzentration des gelösten TiO₂ desto dichter ist die SiO₂-Hülle auf der Pigmentoberfläche.

### Spezifische Oberfläche nach BET (Brunauer-Emmett-Teller):

Die BET-Oberfläche wird mit einem Tristar 3000 der Fa. Micromeritics nach dem statisch volumetrischen Prinzip gemessen

### Testergebnisse

Die Testergebnisse sind in den Tabellen 1 und 2 zusammengestellt. Die Beispiele bzw. Vergleichsbeispiel 1 bis 4 bzw. 5 bis 8 wurden jeweils gemeinsam einem Bewitterungszyklus ausgesetzt. Gegenüber den Pigmenten mit einer undotierten dichten SiO₂ -Hülle (Vergleichsbeispiele 1 bzw. 5) weisen die Pigmente mit einer dotierten dichten SiO₂ -Hülle (Beispiele 2 bis 4 bzw. 6 bis 8) eine deutlich verbesserte Witterungsstabilität - angegeben als Kreidungsstabilität und Glanzbeständigkeit - auf. Beste Ergebnisse lassen sich mit Zinn erzielen.
Gleichzeitig ist zu beobachten, dass die Witterungsstabilität der Pigmente überraschenderweise nicht mit der Dichtigkeit der Hülle - angegeben als H₂SO₄-Löslichkeitkorreliert. Des weiteren zeigt sich, dass die spezifische Oberfläche nach BET im Vergleich zum unbehandeiten Grundkörper (BET 6,5 m²/g) sowohl bei reiner SiO₂-Baschichtung wie auch bei der erfindungsgemäßen Behandlung ansteigt, jedoch ohne Korrelation mit der Witterungsstabilität.

## Patentansprüche

1. Titandioxid-Pigment, dessen Partikel eine mit Metallatomen dotierte dichte Siliciumdioxid-Hülle aufweisen, **dadurch gekennzeichnet,**
**dass** die dichte Siliciumdioxid-Hülle mehrlagig aufgebaut ist und die innerste Lage keine signifikante Menge an Metallatomen enthält

2. Titandioxid-Pigment nach Anspruch 1 **dadurch gekennzeichnet,**
**dass** die dichte Siliciumdioxid-Hülle mit Zinn, Zirkon oder Titan oder Mischungen davon dotiert ist.

3. Titandioxid-Pigment nach Anspruch 1 oder 2 **dadurch gekennzeichnet,**
**dass** die Partikel weiterhin eine äußere Hülle aus Aluminiumoxidhydrat aufweisen.

4. Titandioxid-Pigment nach einem oder mehreren der Ansprüche 1 bis 3 **dadurch gekennzeichnet,**
**dass** die dichte Siliciumdioxid-Hülle 2,0 bis 6,0 Gew.-% bevorzugt 2,5 bis 4,0 Gew.-% SiO₂ bezogen auf das Gesamtpigment enthält.

5. Titandioxid-Pigment nach einem oder mehreren der Ansprüche 1 bis 4 **dadurch gekennzeichnet,**
**dass** die dichte Siliciumdioxid-Hülle 0,1 bis 3,0 Gew.-% bevorzugt 0,1 bis 1,0 Gew.-% Metall gerechnet als Oxid und bezogen auf das Gesamtpigment enthält.

6. Titandioxid-Pigment nach Anspruch 3 **dadurch gekennzeichnet,**
**dass** die äußere Hülle 0,5 bis 6,0 Gew.-% bevorzugt 1,0 bis 4,0 Gew.-% Al₂O₃ bezogen auf das Gesamtpigment enthält.

7. Verfahren zur Herstellung eines Titandioxid-Pigments, dessen Partikel mit einer mit Metallatomen dotierten dichten Siliciumdioxid-Hülle beschichtet sind; **dadurch gekennzeichnet,**
**dass** die Beschichtungskomponenten nacheinander in die Suspension zugegeben werden

8. Verfahren nach Anspruch 7 **dadurch gekennzeichnet,**
**dass** die dichte Siliciumdioxid-Hülle mit Zinn, Zirkon oder Titan oder Mischungen davon dotiert ist.

9. Verfahren nach Anspruch 7 oder 8 **dadurch gekennzeichnet,**
**dass** der pH-Wert der Titandioxid-Suspension zu Beginn der Zugabe der Silicium- und der Metall-Komponenten mindestens 9, bevorzugt mindestens 10 und besonders bevorzugt mindestens 11 beträgt.

10. Verfahren nach einem oder mehreren der Ansprüche 7 bis 9 **dadurch gekennzeichnet,**
**dass** der pH-Wert nach Zugabe der Silicium- und der Metall-Komponenten auf weniger als 9 bevorzugt auf weniger als 8 abgesenkt wird.

11. Verfahren nach einem oder mehreren der Ansprüche 7 bis 10 **dadurch gekennzeichnet,**
**dass** eine äußere Hülle aus Aluminiumoxidhydrat aufgefällt wird.

12. Verwendung des Titandioxid-Pigments nach einem oder mehreren der Ansprüche 1 bis 6 in Lacken. Farben oder Kunststoffen.

## Claims

1. Titanium dioxide pigment, the particles of which have a SiO₂ dense skin doped with metal atoms, **characterized in that**
the SiO₂ dense skin is composed of multiple layers and wherein the innermost layer does not contain any significant quantity of metal atoms.

2. Titanium dioxide pigment according to Claim 1, **characterized in that**
the SiO₂ dense skin is doped with tin, zirconium or titanium or mixtures thereof.

3. Titanium dioxide pigment according to Claim 1 or 2, **characterized in that**
the particles also have an outer skin of hydrous aluminum oxide.

4. Titanium dioxide pigment according to one or several of Claims 1 to 3,
**characterized in that**
the SiO₂ dense skin contains 2.0 to 6.0 % by weight, preferably 2.5 to 4.0 % by weight SiO₂ calculated on total pigment.

5. Titanium dioxide pigment according to one or several of Claims 1 to 4,
**characterized in that**
the SiO₂ dense skin contains 0.1 to 3.0 % by weight, preferably 0.1 to 1.0 % by weight metal calculated as oxide on total pigment.

6. Titanium dioxide pigment according to Claim 3, **characterized in that**
the outer skin contains 0.5 to 6.0 % by weight, preferably 1.0 to 4.0 % by weight Al₂O₃ calculated on total pigment.

7. Process for the production of a titanium dioxide pigment, the particles of which are coated with a SiO₂ dense skin doped with metal atoms, **characterized in that** the coating components are added to the suspension one after the other.

8. Process according to Claim 7, **characterized in that**
the SiO₂ dense skin is doped with tin, zirconium or titanium or mixtures thereof.

9. Process according to Claim 7 or 8, **characterized in that**
the pH of the titanium dioxide suspension at the beginning of adding the silicon and metal components is at least 9, preferably at least 10 and in particular at least 11.

10. Process according to one or several of Claims 7 to 9, **characterized in that**, after adding the silicon and metal components, the pH is lowered to below 9, preferably below 8.

11. Process according to one or several of Claims 7 to 10, **characterized in that** ' an external skin of hydrous aluminum oxide is deposited on the surface.

12. Use of the titanium dioxide pigment according to one or several of Claims 1 to 6 in lacquers, paints or plastics.

## Revendications

1. Pigment de dioxyde de titane, dont les particules présentent une enveloppe dense de dioxyde de silicium dopée par des atomes métalliques, **caractérisé en ce que** l'enveloppe dense de dioxyde de silicium comporte plusieurs couches et que la couche la plus intérieure ne contient pas de quantités significatives d'atomes métalliques.

2. Pigment de dioxyde de titane suivant la revendication 1, **caractérisé en ce que** l'enveloppe dense de dioxyde de silicium est dopée par de l'étain, du zirconium ou du titane, ou leurs mélanges.

3. Pigment de dioxyde de titane suivant la revendication 1 ou 2, **caractérisé en ce que** les particules présentent en outre une enveloppe extérieure d'oxyde d'aluminium hydraté.

4. Pigment de dioxyde de titane suivant une ou plusieurs des revendications 1 à 3, **caractérisé en ce que** l'enveloppe dense de dioxyde de silicium contient de 2,0 à 6,0% en poids, de préférence de 2,5 à 4,0% en poids de SiO₂, par rapport au pigment complet.

5. Pigment de dioxyde de titane suivant une ou plusieurs des revendications 1 à 4, **caractérisé en ce que** l'enveloppe dense de dioxyde de silicium contient de 0,1 à 3,0% en poids, de préférence de 0,1 à 1,0% en poids de métal, calculé en oxyde et par rapport au pigment complet.

6. Pigment de dioxyde de titane suivant la revendication 3, **caractérisé en ce que** l'enveloppe extérieure contient de 0,5 à 6,0% en poids, de préférence de 1,0 à 4,0% en poids de Al₂O₃, par rapport au pigment complet.

7. Procédé de préparation d'un pigment de dioxyde de titane dont les particules sont enrobées d'une enveloppe dense de dioxyde de silicium dopée par des atomes métalliques, **caractérisé en ce que** les composants d'enrobage sont ajoutés successivement dans la suspension.

8. Procédé suivant la revendication 7, **caractérisé en ce que** l'enveloppe dense de dioxyde de silicium est dopée par de l'étain, du zirconium ou du titane, ou leurs mélanges.

9. Procédé suivant la revendication 7 ou 8, **caractérisé en ce que** le pH de la suspension de dioxyde de titane est, au début de l'addition des composants de silicium et de métal, d'au moins 9, de préférence d'au moins 10 et plus préférablement d'au moins 11.

10. Procédé suivant une ou plusieurs des revendications 7 à 9, **caractérisé en ce que** le pH est abaissé à moins de 9, de préférence à moins de 8, après l'addition des composants de silicium et de métal.

11. Procédé suivant une ou plusieurs des revendications 7 à 10, **caractérisé en ce que** qu'il est appliqué une couche extérieure d'oxyde d'aluminium hydraté.

12. Utilisation du pigment de dioxyde de titane suivant une ou plusieurs des revendications 1 à 6 dans des vernis, des peintures ou des matières synthétiques.
